Europäisches Patentamt

European Patent Office

Office européen des brevets

(11) Publication number: **0 032 007**

**B1**

(12) **EUROPEAN PATENT SPECIFICATION**

(45) Date of publication of patent specification: **20.03.85**

(21) Application number: **80304454.4**

(22) Date of filing: **10.12.80**

(51) Int. Cl.⁴: **C 08 B 16/00**

(54) Method for the regeneration of acid in the manufacture of regenerated cellulose.

(30) Priority: **11.12.79 GB 7942661**

(43) Date of publication of application:
**15.07.81 Bulletin 81/28**

(45) Publication of the grant of the patent:
**20.03.85 Bulletin 85/12**

(84) Designated Contracting States:
**AT BE CH DE FR IT LI LU NL SE**

(56) References cited:
**FR-A- 893 298**
**FR-A-1 015 558**
**GB-A- 215 851**

**The file contains technical information submitted after the application was filed and not included in this specification**

(73) Proprietor: **THE ELECTRICITY COUNCIL**
**30 Millbank**
**London, SW1P 4RD (GB)**
(73) Proprietor: **British Sidac Limited**
**Star House 69 Clarendon Road**
**Watford Herts WD1 1JD (GB)**

(72) Inventor: **Millington, James Peter**
**16 Valley Road**
**Weaverham Cheshire CW8 3PP (GB)**
Inventor: **Spetch, Donald**
**30 The Mount**
**Papcastle Cockermouth C815 OJY (GB)**
Inventor: **Scott, William**
**37 Greyrigg Avenue**
**Cockermouth (GB)**

(74) Representative: **Allard, Susan Joyce et al**
**BOULT, WADE & TENNANT 27 Furnival street**
**London EC4A 1PQ (GB)**

Courier Press, Leamington Spa, England.

## Description

This invention relates to the production of regenerated cellulose by the acidification of an alkaline cellulose solution.

In the industrial production of regenerated cellulose, pure cellulose is reacted with sodium hydroxide, and, in the xanthate process, with carbon disulfide, to produce a viscous solution known as viscose, or xanthate. The viscous solution is then reconstituted, either as a transparent film or as a fibre (commonly known as rayon), by introducing the solution into a bath of an aqueous acid solution. The cellulose, thus regenerated, is passed through the aqueous acid solution to remove residual alkali therefrom. In general, in order to complete this process, it is passed through further acid baths (usually two further acid baths i.e. three in all) after which it is washed by a countercurrent of washing water to produce the final product.

Because the solution in which the cellulose is regenerated must at all times be kept acid, the overall acid demand of the manufacturing plant is in excess of that which would theoretically be required to neutralise the alkali used.

This results furthermore in the production of washing water effluent which is quite strongly acidic, and which may require treatment before it is possible to discharge it into the sewerage system.

This invention provides a method of producing regenerated cellulose which method comprises regenerating cellulose by acidifying an alkaline cellulose solution, passing the regenerated cellulose through at least one acid bath to remove residual alkali therefrom, washing the regenerated cellulose with a countercurrent of washing water, passing an acidified solution of sodium sulphate from an acid bath through the anode compartment of an electrolytic cell, and also passing washing water comprising an acidified solution of sodium sulphate through a cathode compartment of the said cell, wherein the said cell is provided with an ion-selective membrane which is substantially impermeable to sulphate ions, which membrane divides the cell to define the anode and the cathode compartments, and electrolysing the solution in the cell to generate sulphuric acid in the anode compartment and to produce sodium hydroxide in the cathode compartment by transport of sodium ions across the said membrane whereby sulphuric acid in the catholyte compartment is neutralized, wherein an approximately neutral catholyte effluent is produced and wherein the anolyte solution is thereafter used to acidify the alkaline cellulose solution to effect the desired regeneration of the cellulose, said method being carried out such that the concentration of sodium ions in the cathode compartment is maintained at not more than twice that in the anode compartment.

In the process of the invention, a viscose solution is acidified, to produce regenerated cellulose. This is generally done by spinning or extruding the solution into aqueous acid. The regenerated cellulose thus produced is passed through the acid solution, and preferably through a number of other acid baths. During passage through the acid baths, acid is carried over by the cellulose, and the successive baths are decreasingly acidic.

In the process of the invention it is generally preferable that the acid solution which is passed through the anode compartment of the electrolytic cell is taken from the final or penultimate acid bath, i.e. the ones containing the least strong acid.

The electrolysis in this cell is carried out in such a way as to lower the acidity of the acidic effluent (i.e. the washing water), so as to make it more nearly neutral, and to increase the acidity of the anolyte, in order to produce more usable acid. The regenerated acid from the anode compartment is preferably recycled to the acid bath, and used as feedstock for the process.

The ion-selective membrane may be any of the various cation, anion, or bipolar membranes which are commercially available, and which can be used for the electrolysis of water, so as to generate acid and base. Cation selective membranes are generally the most favourable, and such materials generally contain either sulphonic or carboxylic acid groups, attached to a fluorocarbon or hydrocarbon base chain.

The electrolysis reaction also produces hydrogen at the cathode, and oxygen at the anode. The hydrogen evolved at the cathode is a useful bonus, as its tends to remove dissolved hydrogen sulphide from the solution, and as a consequence the plant effluent will be reduced in hydrogen sulphide. The oxygen evolved at the anode may be simply allowed to escape to atmosphere, or may be utilised in the plant or elsewhere, for example, in conjunction with an activated sludge bed for further effluent treatment. Similarly, the hydrogen evolved at the cathode may be allowed to escape to atmosphere, or may be put to further use, for example as a fuel in a low-pressure burner.

Although a simple electrolytic cell may be used in the process of the invention, it is preferable that the cell should be one of a bipolar stack of cells, of alternate anode and cathode compartments, as is well known in the art. The anolyte and catholyte are preferably pumped continuously through the respective compartments, so as to provide rapid movement over the electrodes, and minimise the effect of ion depletion at the electrodes.

The cathode material may be any acid resistant conductive material, and we have found that stainless steel is quite suitable.

The anode material may be any material suitable for oxygen evolution in acidic solution, for example anodised lead, platinum, iridium, or platinum/iridium-coated titanium. The cell itself may be constructed of any electrically insulating acid-resistant material, for example polyethylene, polypropylene, polyvinylfluoride, or polyester.

Suitable apparatus for carrying out the method of the invention comprises a bath for containing an aqueous acid solution, means for introducing an aqueous alkaline cellulose solution into an aqueous acid solution to produce regenerated cellulose in the required form, means for passing the regenerated cellulose through an aqueous acid solution in the said bath, an acid washing bath for the regenerated cellulose, means for passing the regenerated cellulose through washing water in the washing bath, an electrolytic cell having a cell divider which is an ion-selective membrane, and which defines cathode and anode compartments in the cell, means for passing acid from the acid bath through the anode compartment of the cell, and washing water from the washing bath through the cathode compartment of the cell, and means for supplying a D.C. voltage to the cell to lower the pH of the anolyte and raise that of the catholyte.

A particular embodiment of the invention will now be described in detail with reference to the accompanying drawings, in which:—

Figure 1 is a schematic diagram of a conventional production line for regenerated cellulose film,

Figure 2 shows a similar production line modified to operate according to the method of the invention, and

Figure 3 is a schematic diagram of an electrolytic cell as used in the method of the invention.

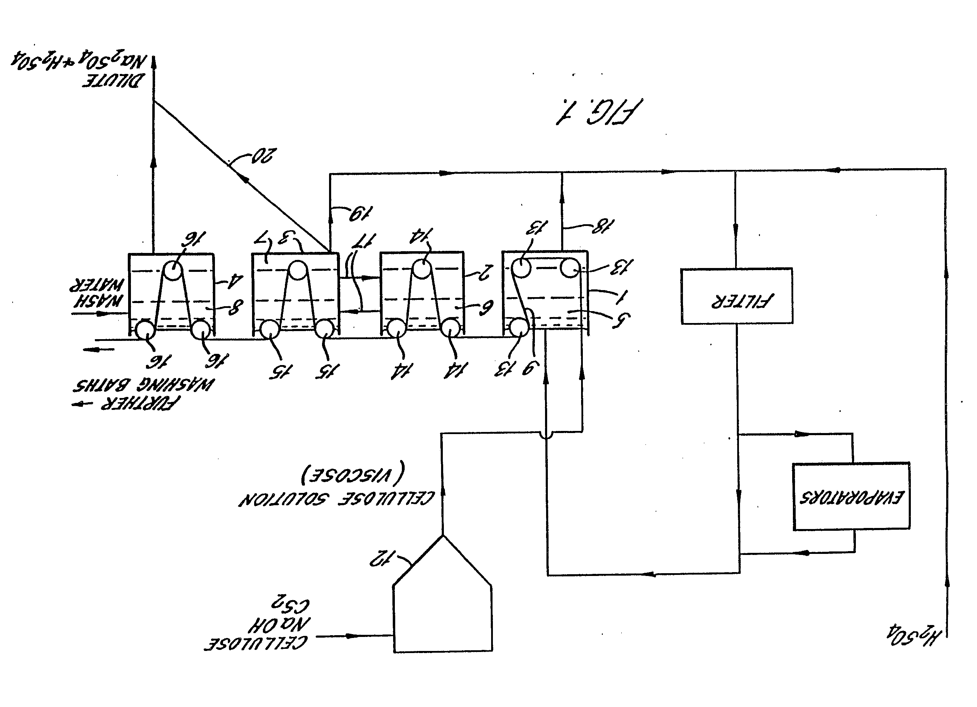

In the conventional production line shown in Figure 1, an alkaline solution of cellulose (viscose) is fed from a container 12 to an acid bath 1, wherein it is acidified by aqueous $H_2SO_4$ 5, typically containing approximately 180 g/L $H_2SO_4$ and 250 g/L $Na_2SO_4$. $H_2SO_4$ is continuously introduced into the acid bath 1, by the conduit system shown.

The regenerated cellulose, in this case in the form of a film 9, passes through the acid bath 1 over rollers 13, and into a second acid bath 2, over rollers 14. Acid 5 from bath 1 is carried over by the film into bath 2 and from thence to bath 3, and this results in a continuous flow of acid through the bath. The acid 6 in bath 2 is in communication by conduit 17 with the acid 7 in bath 3, through which the film 9 passes over rollers 15, after passage through bath 2.

Baths 1, 2 and 3 are progressively less acidic, acid solution being carried by the film from bath 1 to bath 2 and thence to bath 3. Typical concentrations for solutions 6 and 7 are 90 g/l $H_2SO_4$ and 210 g/l $Na_2SO_4$.

After passage through bath 3, the film passes over rollers 16 through bath 4, which contains washing water 8. Several such washing baths are normally used, and the film passes through each bath sequentially, in countercurrent fashion to the washing water. Acid is carried over from bath 3 into bath 4 by the moving film, and thus the washing water 8 in bath 4 is more acidic than that in the next bath, and so on down the line.

A proportion of the excess acid solution produced in the neutralisation process is recycled through conduits 18 and 19, and is mixed with the $H_2SO_4$ feedstock. The mixture is filtered and treated in an evaporator, to ensure that the concentration supplied to bath 1 is appropriate. The greater part of the acid from bath 3 is supplied to waste via conduit 20, together with waste washing water from bath 4.

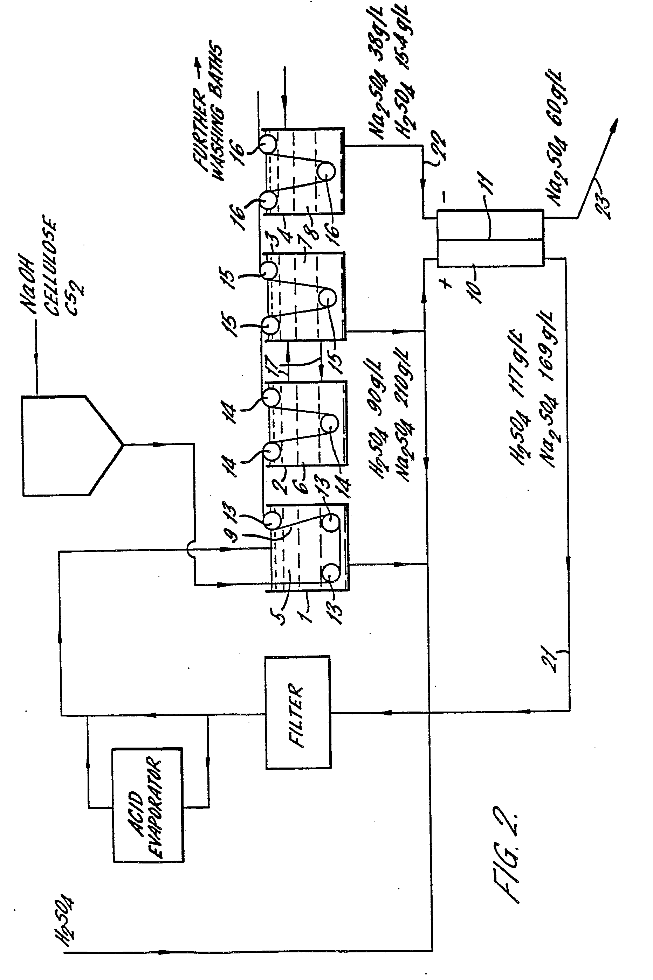

In Figure 2, the same plant has been modified to operate in accordance with the invention, by the provision of an electrolytic cell 10, which is shown schematically with its membrane 11 which is a commercially available cation selective membrane (NAFION). The acid effluent from bath 3 which would otherwise have been allowed to go to waste is passed through the anode compartment of cell 10, from where it is returned to the filter and acid evaporator through conduit 21. Wash water 8 from bath 4 is fed via conduit 22 to the cathode compartment of the electrolytic cell 10.

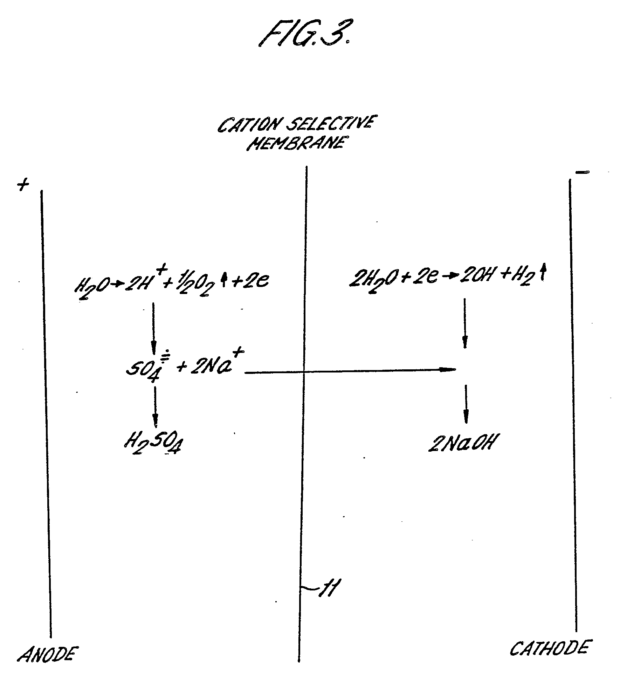

Figure 3 illustrates the overall reaction taking place in the electrolytic cell when a D.C. current is passed between the electrodes. The membrane is relatively impermeable to sulphate ions, and the species mostly responsible for current transfer across the membrane is the sodium ion. Thus sodium ions cross the membrane from anolyte to catholyte, and water discharges at the cathode to give hydrogen gas and $OH^-$. This results in a net production in the cathode compartment of sodium hydroxide, which neutralises the $H_2SO_4$ in the washing water from bath 4, to produce an approximately neutral effluent, containing approximately 60 g/L of sodium sulphate. Hydrogen ions produced at the anode stoichiometrically balance the sulphate ions remaining in the anode compartment, to give a net production of sulphuric acid. In order to maintain the potential required at a suitably low level, the sodium ion concentration in the catholyte is maintained not greater than twice that in the anolyte. The cell system shown is particularly appropriate for the cellulose process, as the sulphuric acid produced contains sodium sulphate, which although a disadvantage for other applications is an advantage if the solution is to be used for cellulose production.

Good results have been obtained using a cell with a preanodised lead anode, a stainless steel cathode, and a "NAFION" cation selective membrane. At a mean cell potential of 6.0 volts for 19.4 hours with such a cell, a current of 250 amps produced the equivalent of 6 kg of $H_2SO_4$ in the anode compartment and 4.92 kg of NaOH in the cathode compartment (equivalent to approximately 4.87 kwh. per kg of $H_2SO_4$).

**Claims**

1. A method of producing regenerated cellulose which method comprises regenerating cellulose by acifiying an alkaline cellulose solution, passing the regenerated cellulose through at least one acid bath (1, 2, 3) to remove residual alkali therefrom, washing the regenerated cellulose with a countercurrent of washing water (8), passing an acidified solution of sodium sulphate from an acid bath through the anode compartment of an electrolytic cell (10), and also passing washing water comprising an acidified solution of sodium sulphate through a cathode compartment of the said cell (10), wherein the said cell is provided with an ion-selective membrane (11) which is substantially impermeable to sulphate ions, which membrane divides the cell to define the anode and the cathode compartments, and electrolysing the solution in the cell to generate sulphuric acid in the anode compartment and to produce sodium hydroxide in the cathode compartment by transport of sodium ions across the said membrane whereby sulphuric acid in the catholyte compartment is neutralized, wherein an approximately neutral catholyte effluent is produced and wherein the anolyte solution is thereafter used to acidify the alkaline cellulose solution to effect the desired regeneration of the cellulose, said method being carried out such that the concentration of sodium ions in the cathode compartment is maintained at not more than twice that in the anode compartment.

2. A method as claimed in claim 1, wherein the regenerated cellulose is passed through three acid baths (1, 2, 3) before being washed with the washing water.

3. A method as claimed in claim 2, wherein the acidified solution passed to the anode compartment is the solution from the final or penultimate acid bath (2, 3).

4. A method as claimed in any one of the preceding claims, wherein the regenerated cellulose is passed through a plurality of washing baths through which the washing water flows in countercurrent fashion, the flow of washing water to the cathode compartment being taken from the first bath (4) through which regenerated cellulose is passed.

**Patentansprüche**

1. Verfahren zur Herstellung von regenierter Zellulose, dadurch gekennzeichnet, daß man Zellulose durch Ansäuern einer alkalischen Zelluloselösung regeneriert, die renergierte Zellulose durch mindestens ein Säurebad (1, 2, 3) führt, um restliches Alkali daraus zu entfernen, die regenerierte Zellulose, im gegenstrom mit Waschwasser (8) wäscht, eine angesäurete Lösung von natriumsulfat aus einem Säurebad durch den Anodenraum einer elektrolytischen Zelle (10) leitet, und eine angesäuerte Lösung von Natriumsulfat enthaltendes Waschwasser durch einen Kathodenraum der Zelle (10) leitet, wobei die Zelle mit einer Ionen-selektiven Membran (11) versehen ist, die für Sulfationen im wesentlichen undurchlässig ist, und die Zelle in einen Anodenraum und eine Kathodenraum teilt, und die Lösung in der Zelle elektrolysiert, um Schwefelsäure im Anodenraum zu regenerieren und Natriumhydroxid im Kathodenraum durch Transport von Natriumionen durch die Membran zu erzeugen, wobei Schwefelsäure im Katholytraum neutralisiert wird, wobei ein annähernd neutraler Katholyt-Abfluß erhalten wird und wobei die Anolytlösung danach zum Ansäuren der alkalischen Zelluloselösung verwendet wird, um die gewünschte Regenerierung der Zellulose zu bewirken, und das Verfahren so ausgeführt wird, daß die Konzentration der Natriumionen im Kathodenraum bei nicht mehr als der zweifachen des Anodenraums gehalten wird.

2. Verfahren nach Anspruch 1, dadurch gekennzeichnet, daß die regenerierte Zellulose durch drei Säurebäder (1, 2, 3) geführt wird, bevor sie mit dem Waschwasser gewaschen wird.

3. Verfahren nach Anspruch 2, dadurch gekennzeichnet, daß die zum Anodenraum geführte angesäuerte Lösung die Lösung vom letzten oder vorletzten Säurebad (2, 3) ist.

4. Verfahren nach einem der vorhergehenden Ansprüche, dadurch gekennzeichnet, daß die regenerierte Zellulose durch eine Vielzahl von Waschbädern geführtwird, durch die das Waschwasser im Gegenstrom fließt, und der Waschwasserstrom zum Kathodenraum aus dem ersten Bad (4), durch das die regenerierte Zellulose geführt wird, entnommen wird.

**Revendications**

1. Procédé de fabrication de cellulose régénérée, procédé qui comporte la régénération de cellulose par acidification d'une solution alcaline de cellulose, le passage de la cellulose régénérée à travers au moins un bain acide (1, 2, 3) pour en enlever l'acali résiduel, le lavage de la cellulose régénérée par un contrecourant d'eau de lavage (8), le passage d'une solution acidifiée de sulfate de sodium depuis un bain acide à travers le compartiment anodique d'une cellule électrolytique (10), et également le passage d'eau de lavage comportant une solution acidifiée de sulfate de sodium à travers un compartiment cathodique de ladite cellule (10), où ladite cellule est munie d'une membrane (11) à sélectivité ionique qui est sensiblement imperméable aux ions sulfate, membrane, qui divise la cellule pour délimiter les compartiments anodique et cathodique, et l'électrolyse de la solution dans la cellule pour former de l'acide sulfurique dans le compartiment anodique, et produire de l'hydroxyde de sodium dans le compartiment cathodique par transport d'ions sodium au travers de ladite membrane, ce par quoi l'acide sulfurique dans le compartiment cathodique est neutralisé, d'où un effluent catholytique approximativement neutre est produit, et d'où la solution anolytique est utilisée par la suite à acidifier la solution alcaline de cellulose pour effectuer la régénération désirée de la cellulose, ledit procédé étant mené de telle sorte que la concentration d'ions sodium dans le compartiment cathodique est maintenue à au plus deux fois celle dans le compartiment anodique.

2. Procédé suivant la revendication 1, où l'on fait passer la cellulose régénérée à travers trois bains acides (1, 2, 3) avant de la laver avec l'eau de lavage.

3. Procédé suivant la revendication 2, où la solution acidifiée acidifiée amenée au comparti-

7 · 0 032 007 · 8

ment anodique est la solution issue du dernier ou avant dernier bain acide (2, 3).

4. Procédé suivant une quelconque des revendications précédentes, où l'on fait passer la cellulose régénérée à travers une pluralité da bains de lavage, au travers desquels l'eau de lavage s'écoule en mode à contrecourant, le flux d'eau de lavage vers le compartiment cathodique provenant du premier bain à travers lequel on fait passer le cellulose régénérée.

CELLULOSE
Na OH
CS2

CELLULOSE SOLUTION
(VISCOSE)

FURTHER →
WASHING BATHS

WASH
WATER

DILUTE
Na2SO4 + H2SO4

H2SO4

EVAPORATORS

FILTER

FIG. 1.

FIG. 2.

NaOH
CELLULOSE
CS2

FURTHER → WASHING BATHS

$Na_2SO_4$ 38 g/l
$H_2SO_4$ 154 g/l

$Na_2SO_4$ 60 g/l

$H_2SO_4$ 90 g/l
$Na_2SO_4$ 210 g/l

$H_2SO_4$ 117 g/l
$Na_2SO_4$ 169 g/l

FILTER

ACID EVAPORATOR

$H_2SO_4$

2

## FIG.3.

CATION SELECTIVE
MEMBRANE

$+$

$H_2O \rightarrow 2H^+ + \tfrac{1}{2}O_2 \uparrow + 2e$     $2H_2O + 2e \rightarrow 2OH + H_2 \uparrow$

$SO_4^= + 2Na^+$

$H_2SO_4$     $2NaOH$

$\sim 11$

ANODE     CATHODE

$-$